Europäisches Patentamt

European Patent Office

Office européen des brevets

(11) Veröffentlichungsnummer: **0 001 398**
A2

(12) # EUROPÄISCHE PATENTANMELDUNG

(21) Anmeldenummer: 78100833.9

(22) Anmeldetag: 06.09.78

(51) Int. Cl.²: **G 05 B 19/00, G 05 B 19/02, G 05 B 19/04, H 03 K 17/00**

(30) Priorität: 29.09.77 DE 2743857

(71) Anmelder: **SIEMENS AKTIENGESELLSCHAFT Berlin und München, Postfach 261, D-8000 München 22 (DE)**

(43) Veröffentlichungstag der Anmeldung: **18.04.79 Patentblatt 79/8**

(72) Erfinder: **Bussmann, Egon, Josef-Vötter-Strasse 19, D-8000 München 9 (DE)**
Erfinder: **Flamme, Bruno, Am Schwaigfeld 36, D-8021 Neuried (DE)**

(84) Benannte Vertragsstaaten: **BE CH FR GB NL SE**

(54) **Elektronischer Programmgeber.**

(57) Die Erfindung bezieht sich auf einen elektronischen Programmgeber, bei dem in zwei Speichern Schalt-Befehlsworte und Zeitspannen-Befehlsworte digital abgespeichert sind. Die Schalt-Befehlsworte bestimmten den Schaltzustand von Schaltgliedern und die Zeitspannen-Befehlsworte die Dauer solcher Schaltzustände. Ein Adressenerzeuger erzeugt für jedes Schalt-Befehlswort und für jedes ihm zugeordnete Zeitspannen-Befehlswort eine Adresse, die beide letztgenannten Worte gleichzeitig adressiert. Ein Zeitgeber ist durch jedes adressierte Zeitspannen-Befehlswort entsprechend voreinstellbar und startbar. Nach Ablauf der durch das Zeitspannen-Befehlswort gegebenen Zeitspanne wird der Adressenerzeuger veranlaßt, mit der nächsten Adresse zuzugreifen. Eine vorhandene Schnittstelle wandelt außerdem jedes adressierte Schalt-Befehlswort in kompatible Signale für die Schaltglieder um. Der Programmgeber besitzt kurze Schaltzeiten, weist einen einfachen Aufbau auf und arbeitet höchst zuverlässig.

SIEMENS AKTIENGESELLSCHAFT          Unser Zeichen
Berlin und München                  VPA 77 P 7151 EPC


Elektronischer Programmgeber

Die vorliegende Erfindung betrifft einen elektronischen Programmgeber.

Elektromechanische Programmwalzen haben eine beschränkte Zeitauflösung für einen Umlauf. Außerdem sind die benutzten Mikroschalter in agressiver Atmosphäre störanfällig und geben zu Schalterprellungen Anlaß. Mit einem entsprechenden elektronischen Programmgeber könnten diese Nachteile vermieden werden.

Es ist daher die Aufgabe der vorliegenden Erfindung, einen solchen elektronischen Programmgeber anzugeben.

Die Aufgabe wird durch einen Speicher, in dem eine Folge von Schalt-Befehlsworten, die jedes einen Schaltzustand der vorgegebenen Schaltglieder bestimmt, sowie einen weiteren Speicher, in dem für jedes Schalt-Befehlswort ein Zeitspannen-Befehlswort, das die Zeitspanne angibt, während welcher der durch das Schalt-Befehlswort gegebene Befehl auszuführen ist, abgespeichert oder ab-Ed 1 Sti/28.6.78

speicherbar sind, durch einen Adressenerzeuger, der für jedes Schalt-Befehlswort und für das ihm zugeordnete Zeitspannen-Befehlswort eine Adresse erzeugt und durch den die beiden letzteren Befehlsworte gleichzeitig adressierbar sind, durch einen Zeitgeber, der durch jedes adressierte Zeitspannen-Befehlswort voreinstellbar und startbar ist und der nach Ablauf der Zeitspanne den Adressenerzeuger durch ein Signal veranlaßt, mit der nächsten Adresse auf die beiden Speicher zuzugreifen, sowie durch eine an den Speicher angeschlossene Schnittstelle, welche jedes adressierte Schalt-Befehlswort in kompatible Signale für die Schaltglieder umwandelt, wobei für jedes Schaltglied ein Ausgang an der Schnittstelle vorgesehen ist, gelöst.

Dieser elektronische Programmgeber hat gegenüber elektromechanischen Schrittschaltwerken den Vorteil kürzerer Schaltzeiten und damit der Möglichkeit, einen automatischen Verfahrensablauf feiner aufzugliedern. Außerdem weist er einen einfachen Aufbau auf und arbeitet höchst zuverlässig. Außerdem benötigt er einen geringen Speicherplatzbedarf.

Ein Ausführungsbeispiel der Erfindung wird anhand der Figuren näher erläutert. Es zeigen
Figur 1 in einem Blockschaltbild den Gesamtaufbau des Ausführungsbeispiels,
Figur 2a und 2b das Ausführungsbeispiel in allen Einzelheiten.

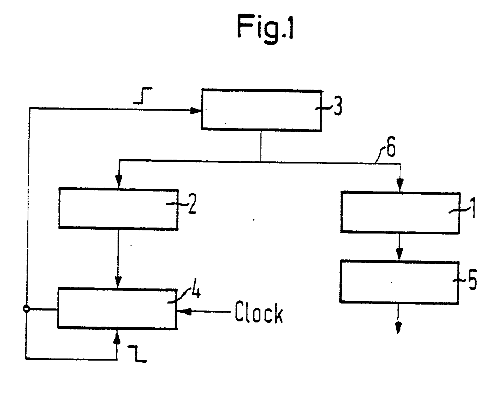

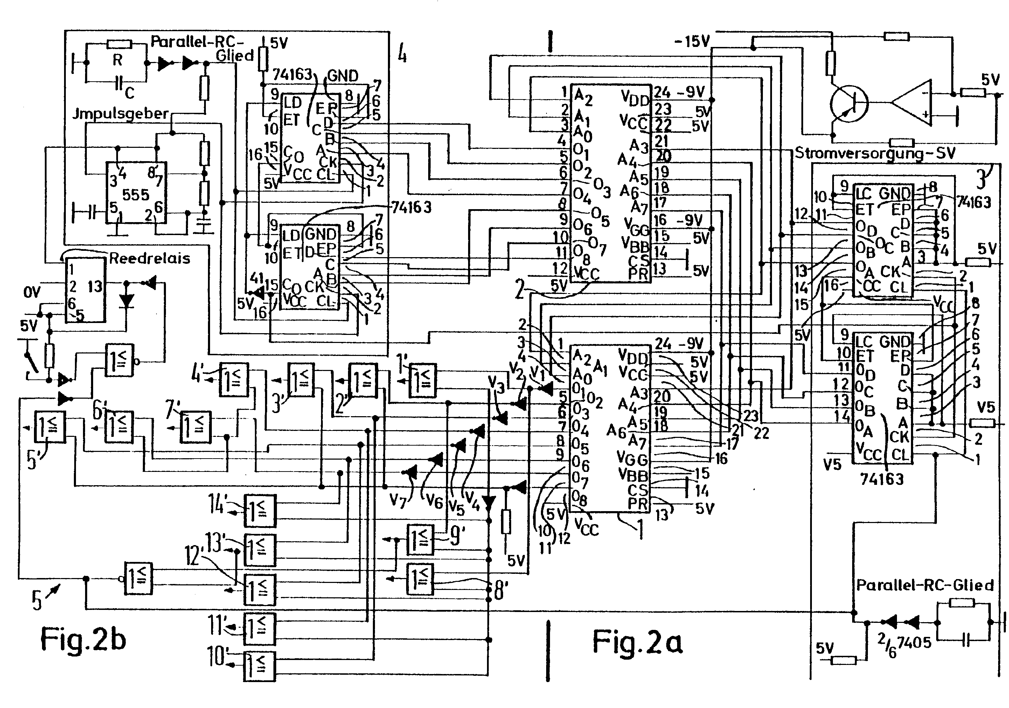

In den Figuren 1 und 2 sind der Speicher mit 1, der weitere Speicher mit 2, der Adressenerzeuger mit 3, der Zeitgeber mit 4 und die Schnittstelle mit 5 bezeichnet.

Im Speicher 1 und im weiteren Speicher 2 ist das gesamte Programm gespeichert oder speicherbar. Dabei enthält der Speicher 1 nur Schalt-Befehlsworte und der Speicher 2 nur Zeitspannen-Befehlsworte.

Jedes Schalt-Befehlswort bestimmt einen Schaltzustand der Schaltglieder, beispielsweise "Ventile 1 und 6 angezogen, alle anderen abgefallen".

Im weiteren Speicher 2 sind nur Zeitspannen-Befehlsworte abgespeichert, wobei jedem Schalt-Befehlswort ein Zeitspannen-Befehlswort zugeordnet ist. Jedes Zeitpsannen-Befehlswort gibt die Zeitspanne an, die der durch das Schalt-Befehlswort gegebene Schaltzustand dauern soll. Der Adressenerzeuger 3 erzeugt für jedes Befehlswort und für das ihm zugeordnete Zeitspannen-Befehlswort eine Adresse und beide Speicher 1 und 2 sind durch ihn über eine Adressenschiene 6 gleichzeitig adressierbar.

Hat der Adressenzähler 3 eine Adresse erzeugt und damit ein Schalt-Befehlswort und ein Zeitspannen-Befehlswort adressiert, so liegt das ausgewählte Schalt-Befehlswort am Eingang der Schnittstelle 5 an, während durch das Zeitspannen-Befehlswort der Zeitgeber voreingestellt und gestartet wird. In der Schnittstelle wird das Schalt-Befehlswort in kompatible Signale für die Stellglieder umgewandelt, wobei für jedes Stellglied ein Ausgang an der Schnittstelle vorhanden ist. Ist die vom Zeitspannen-Befehlswort vorbestimmte Zeitspanne abgelaufen, gibt der Zeitgeber ein Signal an den Adressenerzeuger, durch das er veranlaßt wird, mit der nächsten Adresse auf das nächstfolgende Schalt-Befehlswort und das nächste Zeitspannen-Befehlswort zuzugreifen, wodurch mit diesen neuen Wörtern der soeben beschriebene Vorgang von neuem beginnt.

In dem hier beschriebenen Ausführungsbeispiel ist die Wortlänge der Schalt-Befehlsworte gleich der Anzahl der

-4-     VPA 77 P 7151 EPC

zu schaltenden Stellglieder gewählt. Jedem Bit eines Schalt-Befehlswortes ist ein Stellglied zugeordnet. Hat man beispielsweise N Stellglieder, so sind $2^N$ verschiedene Schaltzustände möglich und die Speicherkapazität des Speichers ist entsprechend groß zu wählen. Der weitere Speicher 2 muß ebenfalls so groß sein, daß in ihm $2^N$ Zeitspannen-Befehlsworte abspeicherbar sind. In jedem der beiden Speicher sind die Worte in zeitlicher Reihenfolge von Speicherplatz O bis Speicherplatz $2^N$ abgespeichert.

Alles weitere wird im folgenden anhand der Figur 2 näher erläutert.

Der Adressenerzeuger besteht aus einem Binärzähler mit Rückstelleingang. Er ist aus zwei Zählerbausteinen 74 163 der TTL-Baureihe (siehe "Digitale Schaltungen MOS" Siemens Datenbuch 1974/75, Band 1, Bereich Bauelemente, Vertrieb 8000 München 80, Balanstr. 73) aufgebaut. Es handelt sich bei diesen Bausteinen um vorwählbare, binär kodierte Vorwärtszähler. In der Figur 2 sind die Ein- und Ausgänge der Zähler wie im genannten Datenbuch bezeichnet und haben auch dieselbe Bedeutung. Dies gilt für alle weiteren verwendeten Bausteine. Die Rückstelleingänge der beiden Zähler 74 163 sind über ein Parallel-RC-Glied nach Null abgeschlossen. Dies sichert, daß der Zähler nach dem Einschalten der Stromversorgung auf 0 steht.

Der Zeitgeber ist ebenfalls mit zwei Zählerbausteinen 74 163 der TTL-Baureihe aufgebaut. Die Rückstelleingänge CL der beiden Zähler sind aus demselben Grund wie beim Adressenerzeuger über ein Parallel-RC-Glied nach Null hin abgeschlossen. Für den Betrieb der beiden Zähler enthält der Zeitgeber einen Impulsgeber, der mit dem Baustein 555 (siehe z.B. Signetics Digital Linear MOS, Data Book 1974, Signetics Inc.) aufgebaut ist. Der zweistufige Binärzähler ist auf Repetierbetrieb geschaltet: Wenn der Zählerhöchststand erreicht wird, schaltet der Übertragsausgang CO von logisch 0 auf logisch 1, wodurch der Adressenerzeuger um 1 weitergeschaltet wird ( der Ausgang CO des unteren Binärzählers im Zeitgeber 4 in Figur 2b ist mit dem Eingängen CK der beiden Binärzähler im Adressenerzeuger 3 in Figur 2a verbunden) und an die Vorwahleingänge das Komplement der nächsten Schaltzustandszeit angelegt wird. Gleichzeitig gelangt ein logisch-0-Signal über einen Inverter 41 an die Ladeeingänge L der beiden Binärzähler im Zeitgeber 4. Beim Eintreffen des nächsten Zählimpulses vom Impulsgeber werden die Zählerbausteine vorgewählt und gleichzeitig schaltet der Übertragsausgang auf logisch 0.

Die Ausgänge A bis D der beiden Binärzähler im Zeitgeber 4 sind parallel mit den Ausgängen $O_1$ bis $O_8$ des weiteren Speichers 2 verbunden, der vorzugsweise ein programmierbarer Nurlesespeicher (PROM) ist und mit dem Baustein 1702 ( Siehe"Digitale Schaltungen MOS") realisiert werden kann.

Da die verwendeten Binärzähler im Zeitgeber 4 Vorwärtszähler sind, ist es zweckmäßig, wenn für das Zeitspannen-Befehlswort das Komplement der reellen Zeitspanne in binärer Darstellung verwendet wird (bei der Verwendung von Rückwärtszählern wäre es dagegen zweckmäßig, die reelle Zeitspanne in binärer Darstellung als Zeitspannen-Befehlswort zu verwenden).

Der Speicher 1 ist wie der weitere Speicher aufgebaut und besteht aus demselben Baustein. Die beiden Speicher könnten auch Schreib/Lesespeicher sein. Auch Kreuzschienenverteiler sind verwendbar.

Die Adresseneingänge $A_0$ bis $A_7$ der beiden Speicher 1 und

-6-    VPA 77 P 7151 EPC

2 sind parallel mit den Zählerausgängen $O_A$ bis $O_D$ der beiden Binärzähler des Adressenerzeugers 3 verbunden.

An die Ausgänge $O_1$ bis $O_8$ des Speichers 1 ist die Schnittstelle angeschlossen. Da die Ausgänge des Speichers 1 nur beschränkt belastbar sind (eine TTL-Last), ist für jeden Ausgang je ein Verstärker $V_1$ bis $V_8$ vorgesehen. Bei TTL-kompatiblen Verbrauchern, wie einige Arten von Read Relais Led's u.a.m., sind vorzugsweise Inverterbausteine mit offenem Kollektorausgang, wie sie beispielsweise durch die Bausteine 7404 oder 7405 (siehe "Digitale Schaltungen MOS") gegeben sind und die bis zu zehn TTL-Lasten gleichzeitig schalten können. Schaltglieder mit Betriebsspannungen von 30 V und maximal 300 mA Verbraucherstrom, wie z.B. elektromechanische Relais, Rührmotoren usw., lassen sich mit Hilfe der Schaltkreise der Reihe SN 75 450/460 (siehe "The TTL Data Book for Design Engineers", 2. Auflage, Texas Instruments, Deutschland 1973) ansteuern. Mit Hilfe dieser Bausteine läßt sich in einfacher Weise die Anzahl der Steuerleitungen auf 2(N-1) Hochstromsteuerleitungen erweitern, wie es in der Figur 2 dargestellt ist. Jeder Ausgang der Schnittstelle ist der Ausgang eines von 14 NOR-Gattern, die mit den Bezugszeichen 1' bis 14' bezeichnet sind. An den Ausgängen der NOR-Glieder sind jeweils die logischen Werte $\overline{O_1 \cdot O_N}$ bis $\overline{O_{N-1} \cdot O_N}$ und an den Ausgängen der NOR-Glieder 8' bis 14' die logischen Werte $\overline{O_1 \cdot \overline{O_N}}$ bis $\overline{O_{N-1} \cdot \overline{O_N}}$ zu entnehmen. Dabei bedeuten hier $O_1$ bis $O_N$ die logischen Variablen für die entsprechenden Ausgänge des Speichers 1, "." die logische Verknüpfung UND und $\overline{\phantom{xxxx}}$ die Negation des darunterliegenden Ausdrucks.

1 Patentanspruch
2 Figuren

-1-    VPA 77 P 7151 EPC

P a t e n t a n s p r u c h

Elektronischer Programmgeber, g e k e n n z e i c h - n e t durch einen Speicher (1), in dem eine Folge von Schaltbefehlsworten, die jedes einen Schaltzustand der vorgegebenen Schaltglieder bestimmt, sowie einen weiteren Speicher (2), in dem für jedes Schaltbefehlswort ein Zeitspannen-Befehlswort, das die Zeitspanne angibt, während welcher der durch das Schaltbefehlswort gegebene Befehl auszuführen ist, abgespeichert oder abspeicherbar sind, durch einen Adressenerzeuger (3), der für jedes Schaltbefehlswort und für das ihm zugeordnete Zeitspannen-Befehlswort eine Adresse erzeugt und durch den die beiden letzteren Befehlsworte gleichzeitig adressierbar sind, durch einen Zeitgeber (4), der durch jedes adressierte Zeitspannen-Befehlswort voreinstellbar und startbar ist und der nach Ablauf der Zeitspanne den Adressenerzeuger durch ein Signal veranlaßt, mit der nächsten Adresse auf die beiden Speicher zuzugreifen, sowie durch eine an den Speicher angeschlossene Schnittstelle (5), welche jedes adressierte Schaltbefehlswort in kompatible Signale für die Schaltglieder umwandelt, wobei für jedes Schaltglied ein Ausgang an der Schnittstelle vorgesehen ist.

Fig.1

Fig.2b

Fig.2a

Parallel-RC-Glied

Stromversorgung-SV

74163

555

Jmpulsgeber

Reedrelais

000 1398

2/2